# EUROPÄISCHE PATENTSCHRIFT

(11) **EP 3 405 364 B1**
(45) Veröffentlichungstag und Bekanntmachung des Hinweises auf die Patenterteilung: **26.01.2022**
(21) Anmeldenummer: 16815851.7
(22) Anmeldetag: 20.12.2016
(51) Int. Cl.: B60Q 1/12, B62J 6/02

(54) **SCHEINWERFER FÜR EINSPURIGES KRAFTFAHRZEUG SOWIE EINSPURIGES KRAFTFAHRZEUG MIT SCHEINWERFER**
HEADLIGHT FOR A SINGLE-TRACK MOTOR VEHICLE, AND SINGLE-TRACK MOTOR VEHICLE WITH HEADLIGHT
PROJECTEUR POUR VÉHICULE À MOTEUR À DEUX ROUES EN LIGNE AINSI QUE VÉHICULE À MOTEUR À DEUX ROUES EN LIGNE MUNI D'UN PROJECTEUR

(30) Priorität: 21.01.2016 DE 102016200829
(43) Veröffentlichungstag der Anmeldung: 28.11.2018
(73) Patentinhaber: Bayerische Motoren Werke Aktiengesellschaft, 80809 München (DE)
(72) Erfinder: RAU, Steffen, 85107 Baar-Ebenhausen (DE); VILSMEIER, Friedrich, 84051 Essenbach (DE)
(86) Internationale Anmeldenummer: PCT/EP2016/081832
(87) Internationale Veröffentlichungsnummer: WO 2017/125230

(56) Entgegenhaltungen:
- WO-A1-2013/017594
- WO-A1-2015/115319
- DE-T5-112015 000 584
- JP-A- 2008 207 770
- US-A- 5 426 571

## Beschreibung

Es wird ein Scheinwerfer für ein einspuriges Kraftfahrzeug angegeben. Weiterhin wird ein einspuriges Kraftfahrzeug mit einem derartigen Scheinwerfer angegeben. Bei dem einspurigen Kraftfahrzeug kann es sich insbesondere um ein Motorrad handeln.

Bei Motorradscheinwerfern erweist es sich als nachteilhaft, dass bei einer Schräglage des Motorrads, wie z.B. bei Kurvenfahrten, die durch den Scheinwerfer generierte Lichtverteilung geneigt wird, was zu einer schlechten Ausleuchtung des Fahrbahnrands führt. Um die Neigung der Lichtverteilung eines Motorradscheinwerfers zu kompensieren, sind aus dem Stand der Technik Motorradscheinwerfer bekannt, welche über die Bewegung eines zusätzlich im Scheinwerfer verbauten Spiegels die Lichtverteilung des Scheinwerfers verschwenken. Durch die Verschwenkung der Lichtverteilung entgegengesetzt zu der Neigung des Motorrads kann ein sogenannter Rollwinkelausgleich erreicht werden, so dass der durch die Lichtverteilung ausgeleuchtete Bereich vor dem Motorrad und insbesondere der Verlauf einer Hell-Dunkel-Grenze im Wesentlichen unveränderlich bleibt. Nichtsdestotrotz benötigen solche Scheinwerfer aufgrund des zusätzlich verbauten Spiegels mehr Bauraum, oder es müssen kleinere Optiken zur Generierung der Lichtverteilung verwendet werden.

Die Druckschrift DE 10 2013 216 584 A1 beschreibt einen Scheinwerfer für ein Motorrad mit einer optischen Einrichtung, die in einem Gehäuse des Scheinwerfers angeordnet ist und eine Lichtquelle und einen Reflektor zur Erzeugung einer Lichtverteilung vor dem Motorrad umfasst, wobei die Lichtverteilung zumindest in einer Ebene verschwenkbar ist, welche senkrecht zur Fahrtrichtung des Motorrads verläuft. Zur Verschwenkung der

Lichtverteilung kann die optische Einrichtung relativ zu dem Gehäuse mittels einer Mechanik gedreht werden.

US 5426571 A offenbart einen weiteren verschwenkbaren Motorradscheinwerfer. Nachteilig bei den im Stand der Technik bekannten Scheinwerfern für Krafträder ist, dass sie zusätzlich zu einem Rollwinkelausgleich kein ausreichendes Kurvenlicht darstellen können.

Es ist somit eine zu lösende Aufgabe zumindest einiger Ausführungsformen, einen Scheinwerfer für ein einspuriges Kraftfahrzeug anzugeben, welcher auf eine einfache Art und Weise sowohl einen Rollwinkelausgleich als auch ein ausreichendes Kurvenlicht ermöglicht.

Diese Aufgabe wird durch einen Gegenstand gemäß dem unabhängigen Patentanspruch gelöst. Vorteilhafte Ausführungsformen und Weiterbildungen des Gegenstandes gehen weiterhin aus den abhängigen Patentansprüchen, der nachfolgenden Beschreibung und aus den Zeichnungen hervor.

Der hier beschriebene Scheinwerfer für ein einspuriges Kraftfahrzeug weist gemäß zumindest einer Ausführungsform ein Trägerteil und ein mit dem Trägerteil verbundenes Lichtmodul auf. Das Lichtmodul ist beweglich mit dem Trägerteil verbunden.

Das Lichtmodul umfasst vorzugsweise zumindest eine Lichtquelle. Beispielsweise kann das Lichtmodul eine Leuchteinheit für ein Abblendlicht und/oder Fernlicht umfassen. Weiterhin kann das Lichtmodul einen oder mehrere Reflektoren und/oder ein Lichtmodulgehäuse umfassen. Bei dem Trägerteil kann es sich z.B. um ein Gehäuse bzw. um ein Gehäuseteil des Scheinwerfers handeln. Weiterhin kann das Trägerteil als Gestell ausgebildet sein. Vorzugsweise ist das Trägerteil derart ausgebildet, dass es an einem Rahmen und oder an einer Gabel des einspurigen Kraftfahrzeugs befestigt sein kann.

Der Scheinwerfer weist weiterhin eine erste Lagereinrichtung auf, mit der das Lichtmodul um eine erste Hauptachse drehbar gegenüber dem Trägerteil gelagert ist, sowie eine zweite Lagereinrichtung, mit der das Lichtmodul um eine zur ersten Hauptachse senkrechte, zweite Hauptachse drehbar gelagert ist. Die erste Lagereinrichtung kann z.B. als Drehlager ausgebildet sein. Insbesondere kann die erste Lagereinrichtung als Wälzlager, wie z.B. als Kugellager bzw. Rillenkugellager, ausgebildet sein. Weiterhin kann die erste Lagereinrichtung als Gleitlager ausgeführt sein. Die erste Hauptachse kann beispielsweise im Wesentlichen parallel zur Fahrtrichtung eines einspurigen Kraftfahrzeugs bei Geradeausfahrt ausgebildet sein.

Die zweite Lagereinrichtung kann z.B. als Drehlager bzw. als Schwenklager ausgebildet sein. Weiterhin kann die zweite Lagereinrichtung beispielsweise als Gleitlager oder als Wälzlager, wie z.B. als Kugellager, ausgeführt sein. Das Lichtmodul kann z.B. mit seiner Unterseite mit der zweiten Lagereinrichtung verbunden sein. Das Lichtmodul und die damit verbundene zweite Lagereinrichtung können beispielsweise eine Einheit bilden, die mit der ersten Lagereinrichtung verbunden sein kann. Dadurch können die erste Lagereinrichtung und die zweite Lagereinrichtung auf eine einfache Art und Weise derart angeordnet sein, dass die Lagereinrichtungen zueinander um 90° verdreht angeordnet sind und die jeweiligen Drehachsen, das heißt die erste Hauptachse und die zweite Hauptachse, senkrecht aufeinander stehen. Vorzugsweise sind sowohl das Lichtmodul als auch die zweite Lagereinrichtung um die erste Hauptachse drehbar ausgebildet.

Der Scheinwerfer weist des Weiteren eine Koppeleinrichtung auf, die das Lichtmodul mit dem Trägerteil derart koppelt, dass das Lichtmodul bei einer Drehung um die erste Hauptachse um die zweite Hauptachse gedreht wird.

Der Scheinwerfer ist derart ausgebildet, dass das Lichtmodul bei einer Drehung um die erste Hauptachse durch die Koppeleinrichtung simultan um die zweite Hauptachse gedreht wird. Durch diesen Mechanismus kann vorteilhafterweise auf einfache Art und Weise sowohl ein Rollwinkelausgleich als auch eine Kurvenlichtfunktion bei einem Scheinwerfer für ein einspuriges Kraftfahrzeug erreicht werden.

Insbesondere ist es dabei nicht notwendig, für eine Drehung um die erste Hauptachse und eine Drehung um die zweite Hauptachse eine Mehrzahl von Antriebseinheiten einzusetzen. Die Koppeleinrichtung ist vorzugsweise sowohl rotatorisch als auch transversal gelagert. Vorzugsweise verbindet die Koppeleinrichtung das Lichtmodul direkt mit dem Trägerteil.

Gemäß der Erfindung ist die Koppeleinrichtung zweiteilig ausgebildet. Die Koppeleinrichtung weist ein erstes Koppeleinrichtungselement und ein zweites Koppeleinrichtungselement auf, welche die Koppeleinrichtung ausbilden. Das erste Koppeleinrichtungselement ist als sogenanntes Kugelkopfgelenk bzw. Uniballgelenk ausgebildet. Das zweite Koppeleinrichtungselement ist als Gleitlager, wie z.B. als Stiftlager, ausgebildet. Vorzugsweise ist das erste Koppeleinrichtungselement und/oder das zweite Koppeleinrichtungselement sowohl rotatorisch als auch transversal gelagert. Beispielsweise kann das als Gleitlager bzw. als Stiftlager ausgebildete zweite Koppeleinrichtungselement derart eingerichtet sein, dass es sowohl eine Drehbewegung als auch eine axiale Bewegung zulässt.

Gemäß einem weiteren Beispiel, das nicht Teil der Erfindung ist, ist die Koppeleinrichtung einteilig ausgebildet. Beispielsweise kann die Koppeleinrichtung ein Elastomer aufweisen bzw. aus einem Elastomer bestehen. Auch bei diesem Beispiel kann die Koppeleinrichtung das Lichtmodul mit dem Trägerteil derart koppeln, dass das Lichtmodul bei einer Drehung um die erste Hauptachse ebenfalls um die zweite Hauptachse gedreht wird.

Gemäß einer weiteren Ausführungsform ist die zweite Lagereinrichtung durch die erste Lagereinrichtung um die erste Hauptachse drehbar gelagert. Beispielsweise kann die zweite Lagereinrichtung in der ersten Lagereinrichtung angeordnet und mit der ersten Lagereinrichtung befestigt sein.

Gemäß einer weiteren Ausführungsform weist der Scheinwerfer eine Antriebseinheit auf, welche dazu ausgebildet ist, eine Drehbewegung um die erste Hauptachse aufzubringen. Beispielsweise kann die Antriebseinheit dazu ausgebildet sein, die Drehbewegung direkt auf die erste Lagereinrichtung aufzubringen. Vorzugsweise stellt die Antriebseinheit die einzige Antriebseinheit dar, welche eine Drehbewegung des Lichtmoduls um die erste Hauptachse und eine resultierende Drehbewegung des Lichtmoduls um die zweite Hauptachse bewirkt. Aufgrund der Koppeleinrichtung kann auf eine weitere Antriebseinheit verzichtet werden. Beispielsweise wird das Lichtmodul sowohl im Rollwinkel, d.h. um die erste Hauptachse, als auch aus der normalen Achse, d.h. um die zweite Hauptachse, gedreht, wenn sich die erste Lagereinrichtung in seiner Achse dreht und durch die Koppeleinrichtung bzw. Aufhängung auch eine Drehbewegung durch die zweite Lagereinrichtung erfolgt.

Weiterhin wird ein einspuriges Kraftfahrzeug angegeben, das einen hier beschriebenen Scheinwerfer aufweist. Das einspurige Kraftfahrzeug kann insbesondere als Kraftrad, wie z.B. als Motorrad, Motorroller oder als Kleinkraftrad, ausgebildet sein. Das einspurige Kraftfahrzeug weist vorzugsweise einen Rahmen und eine Gabel auf, wobei das Trägerteil des Scheinwerfers drehfest mit dem Rahmen und/oder mit der Gabel verbunden sein kann.

Weitere Vorteile und vorteilhafte Ausführungsformen des hier beschriebenen Scheinwerfers ergeben sich aus den im Folgenden in Verbindung mit den Figuren 1 bis 3 beschriebenen Ausführungsformen. Es zeigen:
- Figur 1: eine perspektivische Ansicht einer Vorderseite eines hier beschriebenen Scheinwerfers gemäß einem Ausführungsbeispiel,
- Figur 2: eine weitere perspektivische Vorderseitenansicht des Scheinwerfers aus der Figur 1, und
- Figur 3: eine perspektivische Ansicht einer Rückseite des Scheinwerfers aus der Figur 1.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

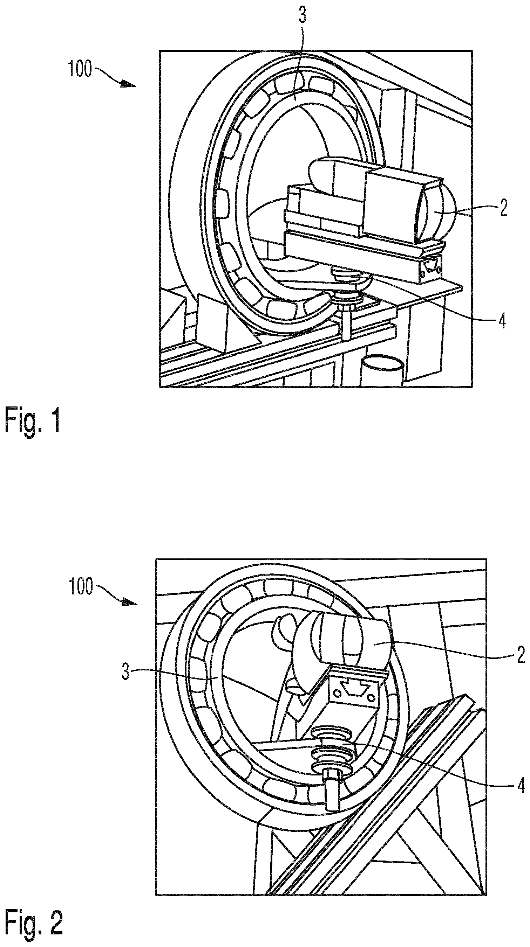

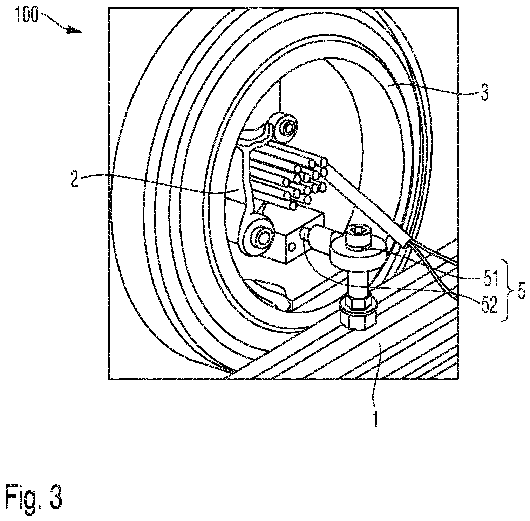

Die Figuren 1 bis 3 zeigen einen Scheinwerfer 100 für ein einspuriges Kraftfahrzeug gemäß einem Ausführungsbeispiel. Dabei ist in den Figuren 1 und 2 jeweils eine perspektivische Ansicht einer Vorderseite des Scheinwerfers 100 dargestellt, wobei die Figuren 1 und 2 jeweils unterschiedliche Stellungen des Scheinwerfers 100 zeigen. Die Figur 3 zeigt eine perspektivische Ansicht einer Rückseite des Scheinwerfers 100.

Der Scheinwerfer 100 weist ein Trägerteil 1, ein mit dem Trägerteil 1 verbundenes Lichtmodul 2, eine erste Lagereinrichtung 3, eine zweite Lagereinrichtung 4 und eine Koppeleinrichtung 5 auf. Das Trägerteil 1 ist im gezeigten Ausführungsbeispiel als Gestell ausgebildet. Alternativ kann das Trägerteil 1 beispielsweise als Gehäuse des Scheinwerfers 100 bzw. als Teil eines Gehäuses des Scheinwerfers 100 ausgebildet sein. Das Lichtmodul 2 umfasst eine Leuchteinheit für ein Abblendlicht und ein Fernlicht.

Das Lichtmodul 2 weist eine Unterseite auf, welche direkt mit der zweiten Lagereinrichtung 4 verbunden ist. Das Lichtmodul 2 und die zweite Lagereinrichtung 4 bilden eine Einheit, welche direkt mit der ersten Lagereinrichtung 3 verbunden ist. Die Einheit aus Lichtmodul 2 und zweiter Lagereinrichtung 4 ist mit der ersten Lagereinrichtung 3 um eine erste Hauptachse drehbar gegenüber dem Trägerteil 1 gelagert. Weiterhin ist das Lichtmodul 2 mit der zweiten Lagereinrichtung 4 um eine zur ersten Hauptachse senkrechte, zweite Hauptachse drehbar gelagert.

Im gezeigten Ausführungsbeispiel ist die erste Lagereinrichtung 3 als Kugellager ausgebildet. Alternativ kann die erste Lagereinrichtung 3 beispielsweise auch als Gleitlager ausgebildet sein. Die zweite Lagereinrichtung 4 ist im gezeigten Ausführungsbeispiel als Schwenklager ausgebildet. Weiterhin kann die zweite Lagereinrichtung 4 beispielsweise als Gleitlager oder Wälzlager ausgebildet sein.

Die Koppeleinrichtung 5 koppelt das Lichtmodul 2 mit dem Trägerteil 1 derart, dass das Lichtmodul 2 bei einer Drehung um die erste Hauptachse gleichzeitig auch um die zweite Hauptachse gedreht wird. Im gezeigten Ausführungsbeispiel ist die Koppeleinrichtung 5 zweiteilig ausgebildet und weist ein erstes Koppeleinrichtungselement 51 und ein zweites Koppeleinrichtungselement 52 auf. Das erste Koppeleinrichtungselement 51 ist hierbei als Kugelkopfgelenk bzw. Uniballgelenk ausgebildet. Das zweite Koppeleinrichtungselement 52 ist als Stiftlager ausgebildet. Alternativ und nicht gemäß der Erfindung kann die Koppeleinrichtung 5 beispielsweise auch einteilig ausgebildet sein und z.B. aus einem Elastomer bestehen. Wird, beispielsweise durch eine einzige Antriebseinheit, eine Drehbewegung um die erste Hauptachse aufgebracht, erfolgt aufgrund der mittels der Koppeleinrichtung 5 verbundenen Lagereinrichtungen 3, 4 ebenso eine Drehbewegung des Lichtmoduls 2 um die zweite Hauptachse. Dadurch kann vorteilhafterweise ein Scheinwerfer für ein einspuriges Kraftfahrzeug bereitgestellt werden, welcher sowohl eine Rollwinkel- als auch eine Kurvenfunktion aufweist.

Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Trägerteil
- 2: Lichtmodul
- 3: erste Lagereinrichtung
- 4: zweite Lagereinrichtung
- 5: Koppeleinrichtung
- 51: erstes Koppeleinrichtungselement
- 52: zweites Koppeleinrichtungselement
- 100: Scheinwerfer

## Patentansprüche

1. Scheinwerfer (100) für ein einspuriges Kraftfahrzeug, aufweisend
- ein Trägerteil (1),
- ein mit dem Trägerteil (1) verbundenes Lichtmodul (2),
- eine erste Lagereinrichtung (3), mit der das Lichtmodul (2) um eine erste Hauptachse drehbar gegenüber dem Trägerteil (1) gelagert ist,
- eine zweite Lagereinrichtung (4), mit der das Lichtmodul (2) um eine zur ersten Hauptachse senkrechte, zweite Hauptachse drehbar gelagert ist, und
- eine Koppeleinrichtung (5), die das Lichtmodul (2) mit dem Trägerteil (1) derart koppelt, dass das Lichtmodul (2) bei einer Drehung um die erste Hauptachse um die zweite Hauptachse gedreht wird,
- wobei die Koppeleinrichtung (5) zweiteilig ausgebildet ist und ein erstes Koppeleinrichtungselement (51) und ein zweites Koppeleinrichtungselement (52) aufweist, **dadurch gekennzeichnet, dass**
- das erste Koppeleinrichtungselement (51) als Kugelkopfgelenk ausgebildet ist, und dass
- das zweite Koppeleinrichtungselement (52) als Gleitlager ausgebildet ist.

2. Scheinwerfer nach Anspruch 1, wobei die erste Lagereinrichtung (3) als Drehlager ausgebildet ist.

3. Scheinwerfer nach einem der vorhergehenden Ansprüche, wobei die erste Lagereinrichtung (3) als Wälzlager, insbesondere als Kugellager ausgebildet ist.

4. Scheinwerfer nach einem der vorhergehenden Ansprüche, wobei die zweite Lagereinrichtung (4) als Drehlager, insbesondere als Schwenklager, ausgebildet ist.

5. Scheinwerfer nach einem der vorhergehenden Ansprüche, aufweisend eine Antriebseinheit, welche dazu ausgebildet ist, eine Drehbewegung um die erste Hauptachse aufzubringen.

6. Scheinwerfer nach Anspruch 5, wobei die Antriebseinheit dazu ausgebildet ist, die Drehbewegung auf die erste Lagereinrichtung (3) aufzubringen.

7. Scheinwerfer nach einem der vorhergehenden Ansprüche, wobei die zweite Lagereinrichtung (4) mit der ersten Lagereinrichtung (3) befestigt ist und wobei die zweite Lagereinrichtung (4) durch die erste Lagereinrichtung (3) um die erste Hauptachse gelagert ist.

8. Scheinwerfer nach einem der vorhergehenden Ansprüche, wobei das Trägerteil (1) als Gehäuse des Scheinwerfers oder als Teil eines Gehäuses des Scheinwerfers ausgebildet ist.

9. Einspuriges Kraftfahrzeug, insbesondere Motorrad, aufweisend einen Scheinwerfer (100) gemäß einem der vorhergehenden Ansprüche.

## Claims

1. Headlight (100) for a single-track motor vehicle, comprising
- a supporting part (1),
- a light module (2) connected to the supporting part (1),
- a first bearing device (3), with which the light module (2) is rotatably supported about a first main axis relative to the supporting part (1),
- a second bearing device (4), with which the light module (2) is rotatably supported about a second main axis perpendicular to the first main axis, and
- a coupling device (5) that couples the light module (2) to the supporting part (1) such that during a rotation about the first main axis, the light module (2) is rotated about the second main axis,
- wherein the coupling device (5) is embodied in two parts and comprises a first coupling device element (51) and a second coupling device element (52), **characterized in that**
- the first coupling device element (51) is embodied as a ball and socket joint, and **in that**
- the second coupling device element (52) is embodied as a slide bearing.

2. Headlight according to Claim 1, wherein the first bearing device (3) is embodied as a rotary bearing.

3. Headlight according to either of the preceding claims, wherein the first bearing device (3) is embodied as a roller bearing, in particular as a ball bearing.

4. Headlight according to any one of the preceding claims, wherein the second bearing device (4) is embodied as a rotary bearing, in particular as a pivot bearing.

5. Headlight according to any one of the preceding claims, comprising a drive unit that is embodied to bring about a rotary motion about the first main axis.

6. Headlight according to Claim 5, wherein the drive unit is embodied to apply the rotary motion to the first bearing device (3).

7. Headlight according to any one of the preceding claims, wherein the second bearing device (4) is fastened to the first bearing device (3) and wherein the second bearing device (4) is supported by the first bearing device (3) about the first main axis.

8. Headlight according to any one of the preceding claims, wherein the supporting part (1) is embodied as a housing of the headlight or as part of a housing of the headlight.

9. Single-track motor vehicle, in particular a motorcycle, comprising a headlight (100) according to any one of the preceding claims.

## Revendications

1. Phare (100) pour un véhicule automobile à deux roues, comprenant :
- une partie de support (1),
- un module d'éclairage (2) relié à la partie de support (1),
- un premier dispositif de montage (3), avec lequel le module d'éclairage (2) est monté de manière rotative autour d'un premier axe principal par rapport à la partie de support (1),
- un deuxième dispositif de montage (4), avec lequel le module d'éclairage (2) est monté de manière rotative autour d'un deuxième axe principal perpendiculaire au premier axe principal, et
- un dispositif d'accouplement (5), qui accouple le module d'éclairage (2) à la partie de support (1) de telle sorte que le module d'éclairage (2) tourne autour du deuxième axe principal lors d'une rotation autour du premier axe principal,
- le dispositif d'accouplement (5) étant configuré à deux parties et comprenant un premier élément de dispositif d'accouplement (51) et un deuxième élément de dispositif d'accouplement (52), **caractérisé en ce que**
- le premier élément de dispositif d'accouplement (51) est configuré en tant qu'articulation à rotule, et **en ce que**
- le deuxième élément de dispositif d'accouplement (52) est configuré en tant que palier lisse.

2. Phare selon la revendication 1, dans lequel le premier dispositif de montage (3) est configuré en tant que palier rotatif.

3. Phare selon l'une quelconque des revendications précédentes, dans lequel le premier dispositif de montage (3) est configuré en tant que palier à roulement, notamment en tant que palier à billes.

4. Phare selon l'une quelconque des revendications précédentes, dans lequel le deuxième dispositif de montage (4) est configuré en tant que palier rotatif, notamment en tant que palier de pivotement.

5. Phare selon l'une quelconque des revendications précédentes, comprenant une unité d'entraînement, qui est configurée pour appliquer un mouvement de rotation autour du premier axe principal.

6. Phare selon la revendication 5, dans lequel l'unité d'entraînement est configurée pour appliquer le mouvement de rotation au premier dispositif de montage (3) .

7. Phare selon l'une quelconque des revendications précédentes, dans lequel le deuxième dispositif de montage (4) est fixé au premier dispositif de montage (3) et dans lequel le deuxième dispositif de montage (4) est monté autour du premier axe principal par le premier dispositif de montage (3).

8. Phare selon l'une quelconque des revendications précédentes, dans lequel la partie de support (1) est configurée en tant que boîtier du phare ou en tant que partie d'un boîtier du phare.

9. Véhicule automobile à deux roues, notamment motocyclette, comprenant un phare (100) selon l'une quelconque des revendications précédentes.
